# EUROPEAN PATENT SPECIFICATION

(11) **EP 2 066 912 B1**
(45) Date of publication and mention of the grant of the patent: **26.10.2011**
(21) Application number: 07794162.3
(22) Date of filing: 14.08.2007
(51) Int. Cl.: F16D 65/12

(54) **BRAKE DISC AND HUB DEVICE FOR A MOTOR VEHICLE**
BREMSSCHEIBEN- UND -NABENVORRICHTUNG FÜR EIN KRAFTFAHRZEUG
DISQUE DE FREIN ET DISPOSITIF À MOYEU POUR VÉHICULE À MOTEUR

(30) Priority: 28.08.2006 SE 0601761
(43) Date of publication of application: 10.06.2009
(73) Proprietor: Scania CV AB, 151 87 Södertälje (SE)
(72) Inventor: ILG, Torvald, S-122 48 Enskede (SE)
(74) Representative: Waldebäck, Hans Olov
(86) International application number: PCT/SE2007/050552
(87) International publication number: WO 2008/026990

(56) References cited:
- WO-A1-00/14424
- WO-A1-02/01088
- WO-A1-02/25135
- WO-A1-02/25135
- WO-A1-2008/036033
- DE-A1- 10 159 799
- DE-C1- 19 807 184
- US-B1- 6 446 765

## Description

### Technical field

The present invention relates to a hub means and a brake disc means for a motor vehicle and to a motor vehicle with such a hub means and a brake disc means. The present invention relates in particular to so-called floating brake discs and their fastening in a hub means.

### Technical background

Motor vehicles are usually provided with a brake system for braking the motor vehicle. Motor vehicles have hubs on which wheels are arranged. The brake system usually comprises a braking surface for each wheel, at least one brake lining for each braking surface, and means for pressing the brake linings against the braking surfaces. Each braking surface is arranged firmly relative to a hub and an associated wheel. The brake linings are adapted to being pressed against the braking surfaces in order to brake the rotation of the wheel. The braking surface usually takes the form either of the inside of a brake drum in so-called drum brakes or of the sides of a brake disc in so-called disc brakes. Disc brakes are now commonly used on heavy trucks. On motor vehicles with disc brakes, the brake disc has traditionally been united with the hub, but repeated powerful braking can result in the brake disc becoming heated so much that its resulting thermal expansion leads to deformation of the hub/brake disc combination. When the hub/brake disc combination has become deformed, it has to be replaced, which in addition to the cost of replacing it may entail lost revenue during the time when the motor vehicle is in the workshop.

To solve the problem of the hub/brake disc combination being deformed by repeated powerful braking, so-called floating brake discs are used on some vehicles. A brake disc floating means that it is not part of the hub but is fastened in the hub in such a way as to allow it to undergo thermal expansion without appreciably deforming the hub. Fastening the brake disc in this way allows it to expand with heat and thereafter contract while cooling without affecting the hub. The brake disc is with advantage symmetrical with respect to a plane transverse to its axis of rotation.

PCT application WO 00/63575 describes a combination of a hub means and a brake disc together with a method for floating fastening of a brake disc on a hub. The hub is provided with cams along its outer circumference, while the brake disc is provided along its inner circumference with protrusions intended to be situated between the cams. Support elements are arranged between the cams and the protrusions and are secured against moving in the axial direction by a retaining ring. The retaining ring is divided at a point which makes it possible to fasten the ring in a groove on the outside of the hub. The support elements are substantially L-shaped or T-shaped and have the function of reducing the heat transfer between the brake disc and the hub. The support elements may alternatively be bent in the portion arranged between the cams and the protrusions in order to further reduce the heat transfer. The retaining ring has to be resilient in order to be fastenable on the hub, which limits the possible choice of material for the ring. This leads to ring rust problems. Another problem with the solution in WO 00/63575 is that the ring allows very little springing movement in the axial direction, which may lead to great stresses occurring in the ring. To solve said problems, it is possible to secure the support elements in the axial direction by means of clamping elements which are arranged parallel with the plane of the brake disc across two support elements and which are secured in the axial direction by a screw screwed into the hub between two support elements. However, the solution described requires a large number of parts for fastening the brake disc in the hub, which makes fastening the brake disc in the hub complicated and therefore expensive.

EP1238204 describes the fastening of a brake disc on a hub with the use of fastening units. Each fastening unit consists of three different parts, two leg elements intended for insertion between the disc and the hub and supported on the brake disc, and one spring element supported by the leg elements. Benefits in flexibility and beat conduction are achieved by designing the spring element as an element separate from the leg elements. Since the fastening unit shown in EP1238204 consists of so many different pieces it is very time consuming to mount and dismount the brake disc.

### Summary of the invention

An object of the present invention is to provide a combination of a hub means and a brake disc, and a motor vehicle with such a combination, whereby the brake disc is fastened in the hub means in an alternative manner to the state of the art.

Another object of the present invention is to provide a combination of a hub means and a brake disc, and a motor vehicle with such a combination, which combination solves at least one of the problems of the state of the art.

A further object of the present invention is to provide a combination of a hub means and a brake disc, and a motor vehicle with such a combination, whereby the problem of sticking by rust is avoided and the brake disc is fastened to the hub means by a smaller number of parts than in solutions according to the state of the art.

At least one of the above objects is achieved with a combination and a motor vehicle according to the independent claims.

Further advantages of the invention are achieved with the features of the dependent claims set out below.

A first aspect of the present invention presents a device for a motor vehicle, which comprises a hub means, a brake disc fastened to the hub means, and an axis of rotation about which the device is adapted to rotating. The brake disc comprises a first side with a first braking surface and a second side with a second braking surface which is substantially parallel with the first braking surface and substantially perpendicular to the axis of rotation, a through-hole extending between the braking surfaces, and at least two brake disc protrusions along the periphery of the through-hole, which brake disc protrusions are offset relative to one another about the axis of rotation. The hub means comprises at least two hub means protrusions which are offset relative to one another about the axis of rotation and are adapted to being in engagement with the brake disc protrusions on the brake disc. The device is **characterised in that** it comprises at least two fastening means which each have at least two insertion elements each arranged between a brake disc protrusion and a hub means protrusion, an intermediate element arranged between the insertion elements, and a pressure element extending from the intermediate element between the insertion elements, whereby the intermediate elements of the fastening means are each fastened in their respective hub means protrusion and whereby the pressure elements of the fastening means are in contact with the brake disc and are adapted to pressing the brake disc against the hub means.

The hub means may be a hub or part of a hub or be adapted to being fastened in the hub.

Several advantages are afforded by a device according to the invention. Arranging the fastening means according to the invention results in their having both the function of holding the brake disc in towards the hub means and the function of serving as inserts between the brake disc and the hub means in two gaps. The result is that the number of parts required for holding the brake disc against the hub means is fewer than in devices according to the state of the art. Having both of these functions performed by the same parts also makes it possible for the fastening of the brake disc to be effected in a shorter time than according to the state of the art.

Features relating to the fastening means are described below on the basis that at least one of the fastening means comprises the features described. It is therefore possible to combine fastening means which have different configurations in the same device.

The insertion elements on at least one of the fastening means may be substantially parallel with one another. Arranging the insertion elements in this manner results in even loading on the two insertion elements.

The insertion elements on at least one of the fastening means may be arranged substantially perpendicular to the braking surfaces, in which case relating hub means protrusions and brake disc protrusions are in engagement with one another via engagement surfaces arranged substantially perpendicular to the braking surfaces. The result is that the force between the hub means protrusion and the brake disc acts only in the direction of rotation.

The intermediate element on at least one of the fastening means may define a plane. Such a configuration of the fastening means simplifies its manufacture.

On at least one of the fastening means, a curved portion may be arranged between-each of the insertion elements and the intermediate element, whereby the insertion elements are arranged substantially on one side of the plane defined by the intermediate element and the curved portions are arranged substantially on the other side of the plane defined by the intermediate element. Providing such curved portions on the fastening means makes more springing possible between the insertion elements and the intermediate element without harmful stresses occurring in the fastening means. The curved portions may also be used as support for a tool intended to remove the fastening means.

The planar portion on the intermediate element of at least one of the fastening means may be arranged substantially parallel with the first braking surface and the second braking surface. The manufacture of the brake disc and the hub means is thereby facilitated.

At least one of the fastening means may be arranged with the pressure element substantially parallel with the intermediate elements, in which case forces on the pressure element will be directed perpendicular to the intermediate element, thereby making it easier to fasten the fastening means in the hub means.

At least one of the fastening means may be fastened to the hub means by threaded connection. There are other ways of fastening the fastening means in the hub means, e.g. welding or riveting, but a threaded connection makes it easy to remove the brake disc from the hub means.

The intermediate element of at least one of the fastening means may have running through it a hole through which a screw fastened in the hub means is arranged. Alternatively, the threaded connection may be arranged in the edge of the fastening means, but a through-hole makes it easier to fit the fastening means in the hub means, while at the same time it becomes simper to use only one screw for fastening the fastening means in the hub means.

At least one of the fastening means may be made of stainless steel to prevent the fastening means becoming stuck by rust in the hub means and/or the brake disc. Another advantage of using stainless steel for the fastening means is that stainless steel has low thermal conductivity, which means that such a solution reduces the heat transfer from the brake disc to the hub. Alternatively, the fastening means may be made in some other way in order at least partly to achieve this. The fastening means may for example be made of galvanised steel or rust-retardant steel.

The insertion elements of at least one of the fastening means may be bent double. Providing the fastening means with bent-double insertion elements results in still less heat transfer between the brake disc and the hub means.

The hub means may be made of nodular iron. Modular iron is usable with advantage for the hub means because it meets well the requirements which may be set for the material of the hub means.

The width of the brake disc along the axis of rotation may be limited by the braking surfaces. It is advantageous that the brake disc should not be of great extent along the axis of rotation, since this might lead to disadvantageous stresses in the brake disc when it becomes heated.

The brake disc may be symmetrical with respect to a plane which is perpendicular to the axis of rotation. A brake disc being symmetrical ensures that it will expand uniformly when it becomes heated.

The brake disc may be made of cast iron. Cast iron is usable with advantage for the brake disc, because it has relatively good heat conduction, thereby ensuring that all parts of the brake disc become heated uniformly and therefore expand uniformly, thus preventing undesirable deformation of the brake disc.

The hub means may be a hub. Alternatively, the hub means may be adapted to being fastened in a hub or constitute part of a hub.

All the fastening means may have substantially the same shape. This is advantageous in leading to the device being less expensive to make. Another advantage is that the thermal conduction between the brake disc and the hub means will be uniform about the axis of rotation if all the fastening means have substantially the same shape. Substantially the same shape means that the shape may vary as a result of manufacturing tolerances.

A second aspect of the present invention presents a motor vehicle which comprises a device according to the first aspect of the present invention with the advantages indicated by the above description.

Preferred embodiments of the invention are described below with reference to the attached drawings.

### Brief description of the drawings

Fig. 1 depicts a motor vehicle provided with a hub means and a brake disc according to an embodiment of the present invention.
Fig. 2 is an exploded view of a device which comprises a hub means and a brake disc according to an embodiment of the present invention.
Fig. 3 depicts five different views of a fastening means according to an embodiment of the present invention.

### Description of preferred embodiments of the present invention

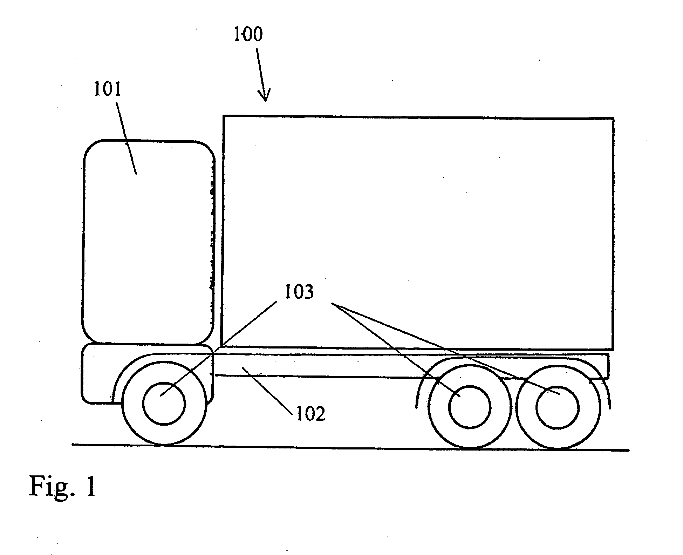

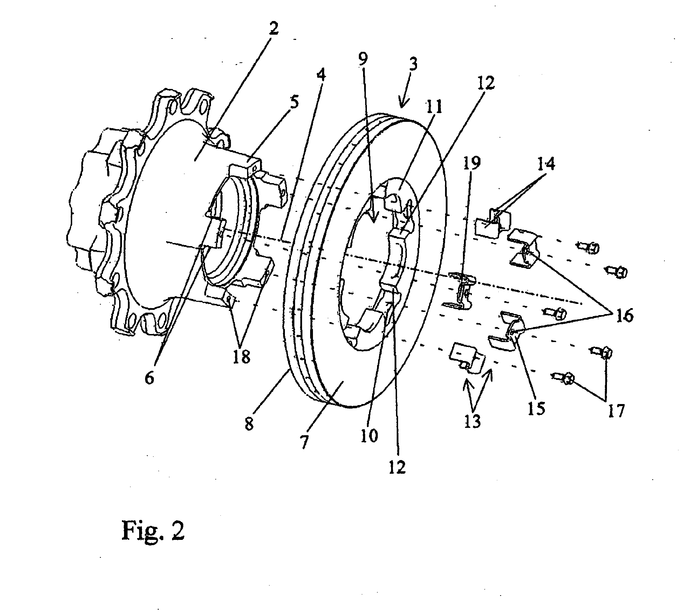

Fig. 1 depicts schematically a motor vehicle 100 provided with a device according to an embodiment of the present invention. The motor vehicle 100 comprises a cab 101, and a chassis 102 on which a number of wheels 103 are arranged. A device 1 is arranged on each wheel. (Fig. 2).

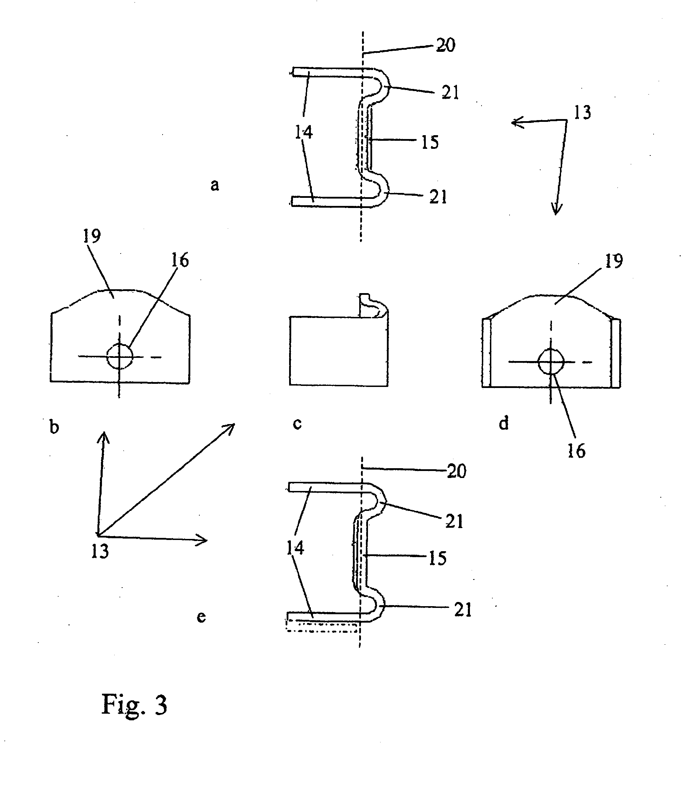

Fig. 2 is an exploded view of a device 1 according to an embodiment of the present invention. The device 1 comprises a hub means 2 in the form of a hub and a brake disc 3. The device 1 is adapted to rotating about an axis of rotation 4. The hub means 2 comprises a plurality of hub means protrusions 5 which are offset relative to one another about the axis of rotation and each comprise an engagement surface 4 on opposite sides of the hub means protrusion 3. The brake disc 3 has a first side with a first braking surface 7 and a second side with a second braking surface 8 (not depicted). The first braking surface 7 and the second braking surface 8 are arranged substantially perpendicular to the axis of rotation 4. The brake disc has running through it a hole 9 with a periphery 10 which defines brake disc protrusions 11 which have engagement surfaces 12 on opposite sides of the brake disc protrusions 11. When the device is assembled, the brake disc protrusions 11 are in engagement with the hub means protrusion 3 Fig. 2 also depicts fastening means 13 illustrated in greater detail in Fig. 3. Each fastening means has two insertion elements 14 which are each arranged between the hub means protrusion 3 and a brake disc protrusion 11. Each fastening means 11 also comprises an intermediate element 15 which is arranged between, and holds together, the insertion elements 14. The intermediate elements have running through each of them a hole 16 through which a screw 17 is arranged. Each screw 17 screws into a relating threaded hole 18 in a relating hub means protrusion 3. Each fastening means also comprises a pressure element 19 illustrated more clearly in Fig. 3. The pressure element on each of the fastening means 13 presses against the brake disc when the fastening means are screwed firmly on the hub means 2. When the screws 17 are screwed into the holes 18, the fastening means 13 are thus fastened in the hub means 2 in such a way that each fastening means extends across a hub means protrusion 5 and the pressure element on each fastening means 13 presses against the brake disc 3 so that the brake disc 3 is pressed against the hub means 2. The pressure elements 19 are thus arranged further from the axis of rotation 4 than the holes 18 when the fastening means are fastened in the hub means 2.
Fig. 3 depicts in greater detail a fastening means 13 according to an embodiment of the present invention in five different views (Figs. 3a-3e). Fig. 3 depicts the insertion elements 14, the intermediate element 15, the through-hole 16 and the pressure element 19. The intermediate element 15 defines a plane 20. Curved portions 21 are arranged between the intermediate element 15 and insertion elements 14. The curved portions 21 allow the insertion elements 14 to be more curved relative to the intermediate element 15 than they could be if they were directly connected to the intermediate element. Fig. 3e illustrates by broken lines one of the insertion elements 14 bent double.

The fastening means 14 according to a preferred embodiment are made in a rust-retardant version. This may be achieved by the fastening means 14 being galvanised or being made entirely of rust-retardant or stainless steel.

The invention is not limited to the embodiments of the present invention described above. A specialist in the field may modify the embodiments described above in many ways without departing from the concept of the invention, which is only limited by the attached claims.

It is possible for the configuration of the fastening means to be different from that depicted in the drawings so long as they comprise the parts defined in the claims set out below. Thus, for example, the pressure element may have different dimensions relative to the fastening means than are shown in the drawings.

The fastening means may be made of some other material than steel, provided that they meet the heat resistance requirements for being arranged in contact with brake discs.

## Claims

1. A device (1) for a motor vehicle (100), which comprises a hub means (2), a brake disc (3) fastened to the hub means (2), and an axis of rotation (4) about which the device (1) is adapted to rotating, whereby the brake disc (3) has a first side with a first braking surface (7) and a second side with a second braking surface (8) which is substantially parallel with the first braking surface (7) and substantially perpendicular to the axis of rotation (4), a through-hole (9) extending between the braking surfaces (7, 8), and at least two brake disc protrusions (11) along the periphery (10) of the through-hole (9), which brake disc protrusions (11) are offset relative to one another about the axis of rotation (4), and whereby the hub means (2) has at least two hub means protrusions (5) which are offset relative to one another about the axis of rotation (4) and are adapted to being in engagement with the brake disc protrusions on the brake disc (3), the device further comprises at least two fastening means (13) which each comprise
at least two insertion elements (14) each arranged between a brake disc protrusion (11) and a hub means protrusion (5),
an intermediate element (15) arranged between the insertion elements (14),
the device is **characterised in that** the intermediate element (15) is arranged between, and holds together, the insertion elements (14),
the device further comprises a pressure element (19) extending from the intermediate element (15) between the insertion elements (14),
whereby the intermediate elements (15) of the fastening means are each fastened in their respective hub means protrusion (5), and whereby the pressure elements (19) of the fastening means (13) are in contact with the brake disc (3) and are adapted to pressing the brake disc (3) against the hub means (2).

2. A device (1) according to claim 1, whereby the insertion elements (14) on at least one of the fastening means (13) are substantially parallel with one another.

3. A device (1) according to claim 1 or 2, whereby the insertion elements (14) on at least one of the fastening means (13) are arranged substantially perpendicular to the braking surfaces (7, 8).

4. A device (1) according to claim 1, 2 or 3, whereby the intermediate element (15) on at least one of the fastening means (13) defines a plane (20).

5. A device (1) according to claim 4, whereby on at least one of the fastening means (13) a curved portion (21) is arranged between each of the insertion elements (14) and the intermediate element (15), whereby the insertion elements (14) are arranged substantially on one side of the plane defined by the intermediate element (15) and whereby the curved portions (21) are arranged substantially on the other side of the plane (20) defined by the intermediate element (15).

6. A device (1) according to any one of the foregoing claims, whereby the planar portion on the intermediate element of at least one of the fastening means (13) is arranged substantially parallel with the first braking surface (7) and the second braking surface (8).

7. A device (1) according to claim 6, whereby at least one of the fastening means (13) is arranged with the pressure element (19) substantially parallel with the intermediate elements (15).

8. A device (1) according to any one of the foregoing claims, whereby at least one of the fastening means (13) is fastened to the hub means (2) by a threaded connection.

9. A device (I) according to claim 8, whereby the intermediate element (15) of at least one of the fastening means (13) has running through it a hole (16) through which a screw (17) which is fastened in the hub means (2) is arranged.

10. A device (1) according to any one of the foregoing claims, whereby at least one of the fastening means (13) is made of stainless steel.

11. A device (1) according to any one of the foregoing claims, whereby the insertion elements (14) of at least one of the fastening means (13) is bent double.

12. A device (1) according to any one of the foregoing claims, whereby the hub means (2) is made of nodular iron.

13. A device (1) according to any one of the foregoing claims, whereby the width of the brake disc (3) along the axis of rotation (4) is limited by the braking surfaces (7, 8).

14. A device (1) according to any one of the foregoing claims, whereby the brake disc (3) is substantially symmetrical with respect to a plane which is perpendicular to the axis of rotation (4).

15. A device (1) according to any one of the foregoing claims, whereby the brake disc (3) is made of cast iron.

16. A device (1) according to any one of the foregoing claims, whereby the hub means (2) is a hub.

17. A device (1) according to any one of claims 1-15, whereby the hub means (2) is adapted to being fastened in a hub.

18. A device (1) according to any one of claims 1-15, whereby the hub means (2) is adapted to constituting part of a hub.

19. A device (1) according to any one of the foregoing claims, whereby all the fastening means (13) have substantially the same shape.

20. A motor vehicle (100) comprising a device (1) according to any one of the foregoing claims.

## Patentansprüche

1. Vorrichtung (1) für ein Kraftfahrzeug (100), die ein Nabenmittel (2), eine an dem Nabenmittel (2) befestigbare Bremsscheibe (3) und eine Drehachse (4), um die die Vorrichtung (1) drehbar ist, aufweist, wobei die Bremsscheibe (3) eine erste Seite mit einer ersten Bremsfläche (7) und eine zweite Seite mit einer zweiten Bremsfläche (8), die im Wesentlichen parallel zu der ersten Bremsfläche (7) und im Wesentlichen senkrecht zur Drehachse (4) verläuft, eine Durchgangsöffnung (9), die sich zwischen den Bremsflächen (7, 8) erstreckt, und wenigstens zwei Bremsscheibenvorsprünge (11) aufweist, die sich entlang des Umfangs (10) der Durchgangsöffnung (9) erstrecken, wobei die Bremsscheibenvorsprünge (11) um die Drehachse (4) relativ zueinander versetzt sind, und wobei das Nabenmittel (2) wenigstens zwei Nabenmittelvorsprünge (5) aufweist, die um die Drehachse (4) relativ zueinander versetzt sind und dazu ausgebildet sind mit den Bremsscheibenvorsprüngen an der Bremsscheibe (3) in Eingriff gebracht zu werden,
wobei die Vorrichtung ferner wenigstens zwei Befestigungsmittel (13) aufweist, jeweils umfassend
wenigstens zwei Einführelemente (14), die jeweils zwischen einem Bremsscheibenvorsprung (11) und einem Nabenmittelvorsprung (5) angeordnet sind, und ein zwischen den Einführelementen (14) angeordnetes Zwischenelement (15), wobei die Vorrichtung **dadurch gekennzeichnet ist, dass** das Zwischenelement (15) zwischen den Einführelementen (14) angeordnet ist und diese zusammenhält, wobei die Vorrichtung ferner ein Druckelement (19) aufweist, das sich von dem Zwischenelement (15) zwischen die Einführelemente (14) erstreckt, wobei die Zwischenelemente (15) der Befestigungsmittel jeweils an ihrem entsprechenden Nabenmittelvorsprung (5) befestigt sind, und wobei die Druckelemente (19) der Befestigungsmittel (13) in Kontakt mit der Bremsscheibe (3) stehen und zum Pressen der Bremsscheibe (3) gegen das Nabenmittel (2) ausgebildet sind.

2. Vorrichtung (1) nach Anspruch 1, wobei die Einführelemente (14) an wenigstens einem der Befestigungsmittel (13) parallel zueinander sind.

3. Vorrichtung (1) nach Anspruch 1 oder 2, wobei die Einführelemente (14) an wenigstens einem der Befestigungsmittel (13) im Wesentlichen senkrecht zu den Bremsflächen (7, 8) angeordnet sind.

4. Vorrichtung (1) nach einem der Ansprüche 1, 2 oder 3, wobei das Zwischenelement (15) an wenigstens einem der Befestigungsmittel (13) eine Ebene (20) definiert.

5. Vorrichtung (1) nach Anspruch 4, wobei an wenigstens einem der Befestigungsmittel (13) ein gekrümmter Abschnitt (21) zwischen jedem der Einführelemente (14) und dem Zwischenelement (15) angeordnet ist, wobei die Einführelemente (14) im Wesentlichen an einer Seite der Ebene angeordnet sind, die durch das Zwischenelement (15) definiert wird, und wobei die gekrümmten Abschnitte (21) im Wesentlichen an der anderen Seite der Ebene (20) angeordnet sind, die von dem Zwischenelement (15) festgelegt wird.

6. Vorrichtung (1) nach einem der vorangehenden Ansprüche, wobei ein ebener Abschnitt an dem Zwischenelement wenigstens eines der Befestigungsmittel (13) im Wesentlichen parallel mit der ersten Bremsfläche (7) und der zweiten Bremsfläche (8) angeordnet ist.

7. Vorrichtung nach Anspruch 6, wobei wenigstens eines der Befestigungsmittel (13) mit dem Druckelement (19) im Wesentlichen parallel zu den Zwischenelementen (15) angeordnet ist.

8. Vorrichtung (1) nach einem der vorangehenden Ansprüche, wobei wenigstens eines der Befestigungsmittel (13) durch eine Gewindeverbindung an dem Nabenmittel (2) befestigbar ist.

9. Vorrichtung (1) nach Anspruch 8, wobei das Zwischenelement (15) wenigstens eines der Befestigungsmittel (13) eine Durchgangsöffnung (16) aufweist, in der eine Schraube (17) vorgesehen ist, die an dem Nabenmittel (2) befestigbar ist.

10. Vorrichtung (1) nach einen der vorangehenden Ansprüche, wobei wenigstens eines der Befestigungsmittel (13) aus Edelstahl hergestellt ist.

11. Vorrichtung (1) nach einem der vorangehenden Ansprüche, wobei die Einführelemente (14) wenigstens eines der Befestigungsmittel (13) doppelt gebogen sind.

12. Vorrichtung (1) nach einem der vorangehenden Ansprüche, wobei das Nabenmittel (2) aus Sphäroguss hergestellt ist.

13. Vorrichtung (1) nach einem der vorangehenden Ansprüche, wobei die Weite der Bremsscheibe (3) entlang der Drehachse (4) durch die Bremsflächen (7), (8) begrenzt wird.

14. Vorrichtung (1) nach einem der vorangehenden Ansprüche, wobei die Bremsscheibe (3) im Wesentlichen symmetrisch bezüglich einer Ebene ist, die senkrecht zur Drehachse (4) verläuft.

15. Vorrichtung (1) nach einem der vorangehenden Ansprüche, wobei die Bremsscheibe (3) aus Gusseisen ist.

16. Vorrichtung (1) nach einem der vorangehenden Ansprüche, wobei das Nabenmittel (2) eine Nabe ist.

17. Vorrichtung (1) nach einem der Ansprüche 1 bis 15, wobei das Nabenmittel (2) zum Befestigen an einer Nabe ausgebildet ist.

18. Vorrichtung (1) nach einem der Ansprüche 1 bis 15, wobei das Nabenmittel (2) ein Teil einer Nabe bildet.

19. Vorrichtung (1) nach einem der vorangehenden Ansprüche, wobei alle Befestigungsmittel (13) im Wesentlichen die gleiche Form aufweisen.

20. Kraftfahrzeug (100) mit einer Vorrichtung (1) nach einem der vorangehenden Ansprüche.

## Revendications

1. Dispositif (1) pour un véhicule à moteur (100), qui comprend un moyen formant moyeu (2), un disque de frein (3) fixé au moyen formant moyeu (2), et un axe de rotation (4) autour duquel le dispositif (1) est adapté de façon à tourner, dans lequel le disque de frein (3) comporte un premier côté avec une première surface de freinage (7) et un second côté avec une seconde surface de freinage (8) qui est sensiblement parallèle à la première surface de freinage (7) et sensiblement perpendiculaire à l'axe de rotation (4), un trou traversant (9) s'étendant entre les surfaces de freinage (7, 8), et au moins deux saillies de disque de frein (11) le long de la périphérie (10) du trou traversant (9), ces saillies de disque de frein (11) étant décalées l'une par rapport à l'autre autour de l'axe de rotation (4), et dans lequel le moyen formant moyeu (2) comporte au moins deux saillies de moyen formant moyeu (5) qui sont décalées l'une par rapport à l'autre autour de l'axe de rotation (4) et qui sont adaptées de façon à être en prise avec les saillies du disque de frein sur le disque de frein (3), le dispositif comprenant de plus au moins deux moyens de fixation (13), qui comprennent chacun :
au moins deux éléments d'insertion (14), disposés chacun entre une saillie de disque de frein (11) et une saillie de moyen formant moyeu (5),
un élément intermédiaire (15) disposé entre les éléments d'insertion (14), le dispositif étant **caractérisé en ce que** l'élément intermédiaire (15) est disposé entre les éléments d'insertion (14) et les maintient réunis,
le dispositif comprenant de plus un élément de pression (19) s'étendant à partir de l'élément intermédiaire (15) entre les éléments d'insertion (14),
dans lequel les éléments intermédiaires (15) des moyens de fixation sont chacun fixés dans leur saillie de moyen formant moyeu respective (5), et dans lequel les éléments de pression (19) des moyens de fixation (13) sont en contact avec le disque de frein (3) et sont adaptés de façon à presser le disque de frein (3) contre le moyen formant moyeu (2).

2. Dispositif (1) selon la revendication 1, dans lequel les éléments d'insertion (14) sur au moins l'un des moyens de fixation (13) sont sensiblement parallèles entre eux.

3. Dispositif (1) selon la revendication 1 ou 2, dans lequel les éléments d'insertion (14) sur au moins l'un des moyens de fixation (13) sont disposés sensiblement perpendiculairement aux surfaces de freinage (7, 8).

4. Dispositif (1) selon la revendication 1, 2 ou 3, dans lequel l'élément intermédiaire (15) sur au moins l'un des moyens de fixation (13) définit un plan (20).

5. Dispositif (1) selon la revendication 4, grâce auquel, sur au moins l'un des moyens de fixation (13), une partie incurvée (21) est disposée entre chacun des éléments d'insertion (14) et l'élément intermédiaire (15), dans lequel les éléments d'insertion (14) sont disposés sensiblement sur un côté du plan défini par l'élément intermédiaire (15), et dans lequel les parties incurvées (21) sont disposées sensiblement sur l'autre côté du plan (20) défini par l'élément intermédiaire (15).

6. Dispositif (1) selon l'une quelconque des revendications précédentes, dans lequel la partie plane sur l'élément intermédiaire d'au moins l'un des moyens de fixation (13) est disposée sensiblement parallèlement à la première surface de freinage (7) et à la seconde surface de freinage (8).

7. Dispositif (1) selon la revendication 6, dans lequel au moins l'un des moyens de fixation (13) est agencé avec l'élément de pression (19) sensiblement parallèle aux éléments intermédiaires (15).

8. Dispositif (1) selon l'une quelconque des revendications précédentes, dans lequel au moins l'un des moyens de fixation (13) est fixé au moyen formant moyeu (2) par une connexion vissée.

9. Dispositif (1) selon la revendication 8, dans lequel l'élément intermédiaire (15) d'au moins l'un des moyens de fixation (13) comporte, s'étendant à travers celui-ci, un trou (16) à travers lequel est disposée une vis (17) qui est fixée dans le moyen formant moyeu (2).

10. Dispositif (1) selon l'une quelconque des revendications précédentes, dans lequel au moins l'un des moyens de fixation (13) est réalisé en acier inoxydable.

11. Dispositif (1) selon l'une quelconque des revendications précédentes, dans lequel les éléments d'insertion (14) d'au moins l'un des éléments de fixation (13) ont une double courbure.

12. Dispositif (1) selon l'une quelconque des revendications précédentes, dans lequel le moyen formant moyeu (2) est en fonte ductile.

13. Dispositif (1) selon l'une quelconque des revendications précédentes, dans lequel la largeur du disque de frein (3) le long de l'axe de rotation (4) est limitée par les surfaces de freinage (7, 8).

14. Dispositif (1) selon l'une quelconque des revendications précédentes, dans lequel le disque de frein (3) est sensiblement symétrique vis-à-vis d'un plan qui est perpendiculaire à l'axe de rotation (4).

15. Dispositif (1) selon l'une quelconque des revendications précédentes, dans lequel le disque de frein (3) est en fonte.

16. Dispositif (1) selon l'une quelconque des revendications précédentes, dans lequel le moyen formant moyeu (2) est un moyeu.

17. Dispositif (1) selon l'une quelconque des revendications 1 à 15, dans lequel le moyen formant moyeu (2) est adapté de façon à être fixé dans un moyeu.

18. Dispositif (1) selon l'une quelconque des revendications 1 à 15, dans lequel le moyen formant moyeu (2) est adapté de façon à constituer une partie d'un moyeu.

19. Dispositif (1) selon l'une quelconque des revendications précédentes, dans lequel tous les moyens de fixation (13) ont sensiblement la même forme.

20. Véhicule à moteur (100) comprenant un dispositif (1) selon l'une quelconque des revendications précédentes.
